# EUROPEAN PATENT APPLICATION

(11) **EP 1 753 146 A1**
(43) Date of publication of application: **14.02.2007**
(21) Application number: 05741415.3
(22) Date of filing: 18.05.2005
(51) Int. Cl.: H04B 1/16, G11B 20/10, G11B 31/00, H04B 1/10

(54) **RECEPTION DEVICE**

(30) Priority: 31.05.2004 JP 2004161701
(71) Applicant: Pioneer Corporation, Tokyo 153-8654 (JP)
(72) Inventor: TSUBOI, Yoshimi, Kawagoe koujou, Pioneer Corp., Saitama; 3508555 (JP)
(74) Representative: Sajda, Wolf E.
(86) International application number: PCT/JP2005/009095
(87) International publication number: WO 2005/117276

(57) **Abstract**

It is an object of the present invention to provide an improved receiver equipped with recording/reproducing means for recording broadcast and reproducing the same, and capable of reproducing a noise-inhibited high quality broadcast.

When recording a broadcast being received in a recording/reproducing device 5, a reception state detecting section 3 generates a reception state detection signal Snz indicating a reception state in accordance with a noise component mixed in a detection signal generated within a tuner section 2, or a noise component mixed in an S-meter signal generated within the tuner section, or a DC component mixed in the S-meter signal, while a writing unit 4 synchronizes the reception state detection signal Snz and a reproduction signal Sau of a broadcast outputted from the tuner section 2, and records these signals as recording signal Sw in the recording/reproducing device 5. When reproducing the recorded broadcast in accordance with the recording signal Sw recorded in the recording/reproducing device 5, a reading unit 6 separates the recording signal Sw (read-out signal Sr) outputted from the recording/reproducing device 5 into a reception state detection signal Snzr and a reproduction signal Saur, while a noise reducing unit 7 passes the reproduction signal Saur through a variable low pass filter contained in the noise reducing unit. At this time, it is possible to output a noise-inhibited high quality reproduction signal Sₒ by changing a high pass cut-off frequency in accordance with the reception state detection signal Snzr and removing a noise component mixed in the reproduction signal Saur.

## Description

### Technical Field

The present invention relates to a receiver for receiving broadcast, particularly to a receiver equipped with a recording/reproducing device for recording/reproducing the broadcast.

### Background Technique

Conventionally, there has been known a receiver equipped with a recording/reproducing device, as disclosed in Japanese Unexamined Patent Application Publication No. 2001-250368.

As shown in Fig. 1 of the published patent application, the conventional receiver comprises: a tuner (1) for receiving radio broadcast and outputting an audio signal; an A/D converter (3) and an encoder (5) for converting the audio signal into predetermined encoded data and recording the same in a storing device (6) such as a hard disk; a decoder (7) and D/A converter (9) for decoding the encoded data read out from the storing device (6) and converting the same into the original audio signal; and an audio amplifier (10) for amplifying the converted original audio signal and supplying the same to a speaker (11).

Once a user specifies a reception channel and a recording on the storing device (6), an audio signal of a desired radio broadcast will be recorded in the storing device (6), thereby making it possible to reproduce the signal and hear the radio broadcast.

Furthermore, as shown in Fig. 7 of the published patent application, the conventional receiver is provided with an electric wave intensity detector (41) for detecting an electric wave intensity. If a reception intensity is weak, one reception channel can be changed over to another, thereby recording an audio signal having an acceptable electric wave state in the storing device (6).

Patent Document 1: Japanese Unexamined Patent Application Publication No. 2001-250368.

### Disclosure of the Invention

### Problem(s) to be Solved by the Invention

As described above, the conventional receiver disclosed in the foregoing patent application is provided with an electric wave intensity detector (41) for changing over reception channel so that it is possible to receive an audio signal having an acceptable electric wave state. This forms an arrangement in which an audio signal received by the tuner (1) is converted as such into encoded data and recorded in the storing device (6), so that it can be later read out from the storing device (6) and converted back into the original audio signal, thereby reproducing the audio signal.

For this reason, since it is difficult to ensue that a user always designates a reception channel having an acceptable electric wave state, there will be a possibility that an audio signal containing a noise will be recorded in the storing device (6). As a result, once the user later reproduces the audio signal, the noise will also be reproduced, causing the user to hear a buzzing radio broadcast containing the noise.

For example, regarding a receiver mounted in a mobile body such as an automobile, since it is impossible to avoid receiving a broadcast wave affected by a multi-pass fading, contiguity disturbance or the like, noise will be mixed into an audio signal. When such an audio signal is recorded in the storing device (6) and then reproduced, there will be a problem that a buzzing noise will also be reproduced.

The present invention has been accomplished in view of the above-discussed conventional problem and it is an object of the present invention to provide an improved receiver equipped with recording/reproducing means for recording broadcast and reproducing the same, thereby reproducing a high quality noise-inhibited broadcast.

### Means for Solving the Problem

An invention according to claim 1 is a receiver having recording/reproducing means for recording and reproducing received broadcast. This receiver comprises: receiving means for receiving broadcast wave and generating reproduction signal; reception state detecting means for generating a reception state detection signal indicating a reception state in accordance with an internal signal generated within the receiving means; recording/reproducing means for recording as recording signal the reception state detection signal and the reproduction signal in a mutually corresponding relation; and noise reducing means which receive the recording signal recorded in the recording/reproducing means and remove a noise component contained in the recording signal and mixed in the reproduction signal in accordance with the reception state detection signal.

An invention according to claim 6 is a recording/reproducing method for use with a receiver having receiving/reducing means for recording and reproducing received broadcast. This method comprises: a receiving step for receiving broadcast waves and generating a reproduction signal; a reception state detecting step for generating a reception state detection signal indicating a reception state in accordance with an internal signal generated in the receiving step; a writing step for recording as a recording signal the reception state detection signal and the reproduction signal in a mutually corresponding relation in the recording/reproducing means; a reading step for outputting the recording signal recorded in the recording/reproducing means; and a noise reducing step for removing a noise component contained in the recording signal outputted in the reading step and mixed in the reproduction signal in accordance with the reception state detection signal.

### Brief Description of the Drawings

- Fig. 1: is a block diagram showing a composition of a receiver formed according to an embodiment of the present invention.
- Fig. 2: is a block diagram showing a composition of a receiver formed according to an example.
- Fig. 3: provides graphs showing the function and operation of the receiver according to Fig. 2.
- Fig. 4: is a block diagram showing the composition of a receiver formed according to another example.
- Fig. 5: is a block diagram showing the composition of a receiver formed according to a further example.
- Fig. 6: provides graphs showing the function and operation of the receiver according to Fig. 5.

### Best Mode of Carrying Out the Invention

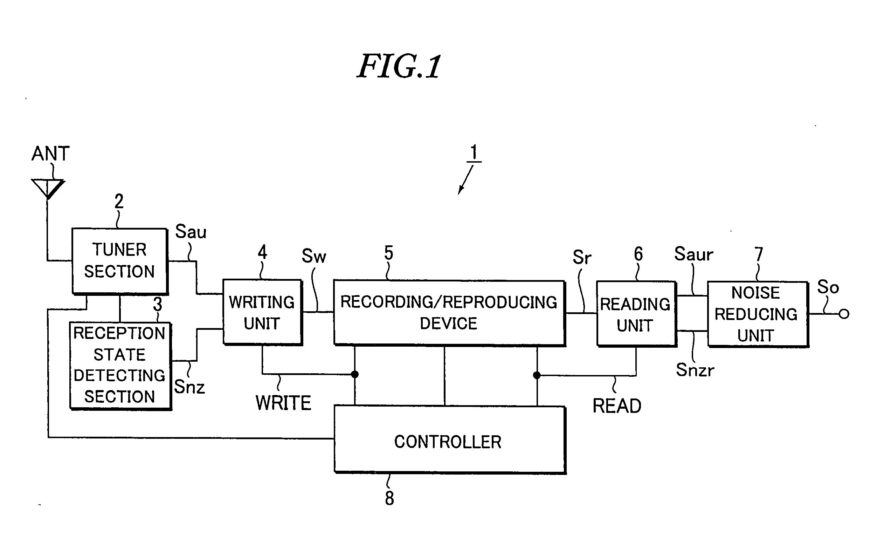

Next, description will be given to explain a receiver formed according to an embodiment of the present invention. Fig. 1 is a block diagram showing the composition of the receiver formed according to an embodiment of the present invention.

As shown in Fig. 1, the receiver 1 comprises a tuner section 2 serving as receiving means connected with an antenna ANT which receives broadcast waves, a reception state detecting section 3, a writing unit 4, a recording/reproducing device 5, a reading unit 6, a noise reducing unit 7 and a controller 8.

A controller 8 controls an operation of the receiver 1 in accordance with a user's instruction inputted through an operating unit (not shown).

The tuner section 2 operates under control of the controller 8 to tune-receive broadcast waves of a broadcast station selected by a user, performs a detection or the like, thereby outputting a reproduction signal Sau as a so-called detection output or a demodulation output.

Namely, if the tuner section 2 is a radio broadcast receiving section for receiving a radio broadcast, an audio signal having an audible frequency and generated in the foregoing detection or the like will be outputted as a reproduction signal Sau. Further, when receiving a stereo broadcast of two channels or a multi-channel broadcast of two or more channels, reproduction signals Sau separated into the respective channels will be outputted.

Moreover, if the tuner section 2 is provided for receiving a broadcast such as a television broadcast including video information and audio information, an audio signal having an audible frequency and generated in the foregoing detection or the like will be outputted as a reproduction signal Sau. Further, when receiving a stereo broadcast of two channels or a multi-channel broadcast of two or more channels, reproduction signals Sau separated into the respective channels will be outputted.

The reception state detecting section 3 detects a reception state in accordance with an internal signal such as an intermediate frequency signal (IF signal) generated by the tuner 2 during reception, and outputs a reception state detection signal Snz indicating a detected reception state.

For example, the reception state detecting section 3 detects a reception state in accordance with a level change of a noise component mixed in a detection signal outputted from a detector provided in the tuner section 2, or detects a reception state in accordance with a level change of a noise component mixed in an S-meter signal indicating a field intensity and outputted from an intermediate frequency amplifier provided in the tuner section 2. The reception state detecting section 3 also detects a reception sensitivity in accordance with a level change of DC component of the S-meter signal, thereby detecting a reception state in accordance with the detected reception sensitivity.

Then, a reception state detection signal Snz is outputted indicating that a worse reception state will be caused by higher levels of noise components mixed in a detection signal or S-meter signal, and that a better reception state can be ensured by lower levels of these noise components.

On the other hand, in an arrangement for detecting a reception state in accordance with a reception sensitivity, a better reception state can be ensured by a higher level of DC component of S-meter signal, while a worse reception state will be caused by a lower level of such DC component.

The writing unit 4, upon receiving a write control signal WRITE from the controller 8, will generate a recording signal Sw by making a reproduction signal Sau to correspond to a reception state detection signal Snz in time, thereby recording the signal in the recording/reproducing device 5.

Namely, the writing unit 4, by synchronizing the reproduction signal Sau and the reception state detection signal Snz with a reception time, performs an adjustment to prevent a time deviation between the reproduction signal Sau and the reception state detection signal Snz, and records the synchronism-adjusted reproduction signal Sau and the reception state detection signal Snz in the recording/reproducing device 5.

Furthermore, the writing unit 4 adds an identification signal to the head of the recording signal Sw, and upon receiving a control signal indicating a finished recording from the controller 8, will add an end signal indicating an end position of the recording signal Sw at the end of the recording signal Sw, thereby outputting the processed signal.

Then, the controller 8 manages respective times (hereinafter, referred to as "additional times") in which identification signals and end signals have been added, thereby making it possible to identify a range of the recording signal Sw. Further, the controller 8 operates to cause a liquid crystal display or the like provided in an operating unit (not shown) to display information of additional times, thereby showing a user a broadcast recorded in the recording/reproducing device 5.

The recording/reproducing device 5, upon receiving a write control signal WRITE supplied from the controller 8, will record a recording signal Sw supplied from the writing unit 4.

Moreover, the recording/reproducing device 5, upon receiving a read control signal READ from the controller 8, outputs as a read-out signal Sr the recording signal Sw previously recorded.

Here, if the controller 8 specifies an identification signal added in the recording signal Sw previously recorded (hereinafter, the recording signal Sw previously recorded is referred to as "read-out signal Sr"), and outputs a read control signal READ, the recording/reproducing device 5 will output the read signal Sr in which a specified identification signal has been added.

Moreover, the recording/reproducing device 5, upon receiving a write control signal WRITE and a read control signal READ from the controller 8, will record a recording signal Sw supplied from the writing unit 4 and at the same time output the read-out signal Sr.

Here, when the controller 8 specifies an identification signal added in a read-out signal Sr previously recorded, and when a write control signal WRITE and a read control signal READ are outputted, the recording/reproducing device 5 will record the recording signal Sw supplied from the writing unit 4 during reception and at the same time output the read-out signal Sr specified by the identification signal. Therefore, it is possible for a user to record a broadcast being received in the recording/reproducing device 5 and at the same time output read-out signal Sr of other broadcast previously recorded.

Moreover, once the controller 8 outputs a write control signal WRITE and a read control signal READ without specifying an identification signal, the recording/reproducing device 5 will record a recording signal Sw supplied from the writing unit 4 during reception, and at the same time read out the recording signal Sw, thus outputting the same as a read-out signal Sr. In this way, it is possible for a user to record a broadcast being received in the recording/reproducing device 5 and at the same time output a read-out signal Sr of this broadcast.

The reading unit 6 operates in accordance with a read control signal READ to receive the read-out signal Sr supplied from the recording/reproducing device 5, synchronize and separate on a time axis a reproduction signal Sau and a reception state detection signal Snz contained in the read-out signal Sr, thereby supplying the separated reproduction signal Sau (hereinafter, a separated reproduction signal Sau is represented by a sign Saur) and the separated reception state detection signal Snz (hereinafter, a separated reception state detection signal Snz is represented by a sign Snzr) to the noise reducing unit 7.

The noise reducing unit 7 operates in synchronism with a change of the reception state detection signal Snzr to remove a noise component mixed in the reproduction signal Saur, thereby generating and thus outputting a noise-reduced (inhibited) reproduction signal Sₒ and supplying the signal to a speaker or the like.

Here, the noise reducing unit 7 is formed of a variable low pass filter 7a which has a high pass cut-off frequency fu at an upper limit of an audible frequency band, and changes the high pass cut-off frequency fu towards a low frequency in response to a change in the reception state detection signal Snzr.

Namely, the noise reducing unit 7, when receiving a reception state detection signal Snzr indicating an optimum reception state, sets a high pass cut-off frequency fu determined as a default value. On the other hand, when receiving a reception state detection signal Snzr indicating that a reception state is not acceptable, the high pass cut-off frequency fu will be changed towards a low frequency in response to the reception state detection signal Snzr, thereby removing a noise component mixed in the reproduction signal Saur.

Next, description will be given to explain an operation of the receiver 1 having the above-described structure, based on an example in which the receiver 1 is used by a user.

### Recording Operation

Once a user instructs the controller 8 to start a reception, the tuner section 2 will start its receiving operation under the control of the controller 8. Further, once a user specifies a desired broadcast, the controller 8 will instruct the tuner section 2 to obtain a tuned-frequency signal (local oscillation signal) corresponding to a specified broadcast station, so that the tuner section 2 will tune-receive a broadcast wave of a specified broadcast station.

In this way, when the tuner section 2 is performing its receiving operation, once a user instructs the recording/reproducing device 5 to record a broadcast, a write control signal WRITE will be supplied to the recording/reproducing device 5 from the controller 8, thereby allowing the writing unit 4 and the recording/reproducing device 5 to start a recording operation.

Then, the tuner section 2 performs a tuning and a detection or the like to output a reproduction signal Sau, while the reception state detecting section 3 will output a reception state detection signal Snz. Further, the writing unit 4 will generate a recording signal Sw which has synchronized the reproduction signal Sau and the reception state detection signal Snz, thereby recording the signal in the recording/reproducing device 5.

When a user instructs the recording to be ended, a control signal indicating the end of the recording will be outputted from the controller 8, while a write control signal WRITE will no longer be outputted, so that the writing unit 4 and the recording/reproducing device 5 will finish the recording operation.

In this way, once a user instructs a <recording operation> during reception, the recording/reproducing device 5 will record a broadcast being received as a recording signal Sw consisting of a reproduction signal Sau and a reception state detection signal Snz.

### Reproducing Operation

Once a user specifies an additional time and instructs a recording to be started with respect to the controller 8 in order to reproduce a desired broadcast recorded in the recording/reproducing device 5, a specified additional time and a read control signal READ will be supplied from the controller 8 to the recording/reproducing device 5 and the reading unit 6, thereby allowing the recording/reproducing device 5 and the reading unit 6 to start a reproducing operation.

Then, the recording/reproducing device 5 outputs a read-out signal Sr specified by an additional time, while the reading unit 6 synchronism-separates the read-out signal Sr into a reproduction signal Saur and a reception state detection signal Snzr. Further, the noise reducing unit 7, in response to a change in a reception state detection signal Snzr, removes a noise component mixed in the reproduction signal Saur, outputs a noise-reduced reproduction signal Sₒ and supplies the signal to a speaker or the like.

Then, once the recording/reproducing device 5 finishes outputting a read-out signal Sr in relation to a broadcast specified by a user, a control signal indicating an ending of recording is outputted from the controller 8, while the write control signal WRITE is no longer outputted, thereby rendering the writing unit 4 and the recording/reproducing device 5 to finish the recording operation.

Moreover, if a user has instructed an ending of reproduction while the recording/reproducing device 5 is outputting a read-out signal Sr, a control signal indicating an ending of recording is outputted from the controller 8, while the write control signal WRITE is no longer outputted, thereby rendering the writing unit 4 and the recording/reproducing device 5 to finish the recording operation.

In this way, once a user instructs a <reproducing operation>, the recording/reproducing device 5 will output a recorded read-out signal Sr, thereby making it possible to reproduce a previously recorded broadcast.

Furthermore, the recording/reproducing device 5 outputs a read-out signal Sr consisting of a reception state detection signal Snzr and a reproduction signal Saur, while the noise reducing unit 7 removes a noise component from the reproduction signal Saur in accordance with the reception state detection signal Snzr, thereby reproducing a noise-inhibited high quality sound and supplying the same to a user.

### Simultaneous Operations of Recording and Reproducing

Next, while the tuner section 2 is performing a receiving operation, once a user instructs the recording/reproducing device 5 to record and reproduce a broadcast with respect to the controller 8, simultaneous operations of recording and reproducing for simultaneously performing a recording and a reproducing will be started under the control of the controller 8.

Here, once a user specifies an additional time and instructs simultaneous operations of recording and reproducing in order to reproduce a desired broadcast recorded in the recording/reproducing device 5, the controller 8 will supply a write control signal WRITE to the writing unit 4 and the recording/reproducing device 5, and supply the additional time and a read control signal READ to the recording/reproducing device 5 and the reading unit 6.

In this way, while the writing unit 4 is recording a broadcast being received as a recording signal Sw in the recording/reproducing device 5, the recording/reproducing device 5 will output through the reading unit 6 a recorded read-out signal Sr specified by an additional time. Further, the noise reducing unit 7 will generate a noise-inhibited reproduction signal Sₒ and output the same.

Therefore, once a user specifies an additional time and instructs simultaneous operations of recording and reproducing, it is possible to reproduce and thus hear a previously recorded broadcast and at the same time to newly record a broadcast which is just being received.

Furthermore, since the noise reducing unit 7 removes a noise component from a reproduction signal Saur in accordance with a reception state detection signal Snzr, it is possible to reproduce a noise-inhibited high quality sound through a speaker or the like, thereby supplying the reproduced sound to the user.

On the other hand, if a user instructs simultaneous operations of recording and reproducing without specifying an additional time, the controller 8 will supply a write control signal WRITE to the writing unit 4 and the recording/reproducing device 5, and supply a read control signal READ to the recording/reproducing device 5 and the reading unit 6. Namely, there would be no additional time to be supplied from the controller 8 to the recording/reproducing device 5.

In this way, while the writing unit 4 is recording a broadcast being received as a recording signal Sw in the recording/reproducing device 5, the recording/reproducing device 5 will at the same time read out the recording signal Sw as a read-out signal Sr which is then outputted through the reading unit 6. Moreover, the noise reducing unit 7 will generate a noise-inhibited reproduction signal Sₒ and output the same.

Therefore, once a user instructs simultaneous operations of recording and reproducing without specifying an additional time, it is possible to record a broadcast being received in the recording/reproducing device 5, and at the same time to output a read-out signal Sr of the broadcast. Furthermore, since the noise reducing unit 7 removes a noise component from a reproduction signal Saur in accordance with a reception state detection signal Snzr, it is possible to reproduce a noise-inhibited high quality sound through a speaker or the like, thereby supplying the reproduced sound to the user.

As described above, according to the receiver 1 of the present embodiment, when a broadcast being received is recorded in the recording/reproducing device 5, this broadcast is recorded as a recording signal Sw consisting of a reproduction signal Sau and a reception state detection signal Snz indicating a reception state. On the other hand, when a broadcast recorded in the recording/reproducing device 5 is reproduced, it is possible to utilize the reception state detection signal Snzr contained in the read-out signal Sr so as to remove a noise component mixed in the reproduction signal Sau, thereby making it possible to provide a user with a noise-inhibited high quality broadcast.

Moreover, even when a broadcast has been recorded without specifying a broadcast station having an acceptable radio wave state, it is still possible to make use of a reception state detection signal Snzr contained in a read-out signal Sr so as to remove a noise component mixed in the reproduction signal Sau, thereby making it possible to reproduce a high quality broadcast in accordance with a general utilization performed by a user.

Moreover, even when the receiver 1 of the present embodiment is mounted in a mobile body such as an automobile and a broadcast wave is received and recorded in the recording/reproducing device 5 in an environment inevitably influenced by a multifading or a contiguity disturbance or the like, it is still possible during reproduction to utilize the reception state detection signal Snzr contained in the read-out signal Sr so as to remove a noise component mixed in the reproduction signal Sau, thereby making it possible to provide a user with a high quality broadcast.

### Example 1

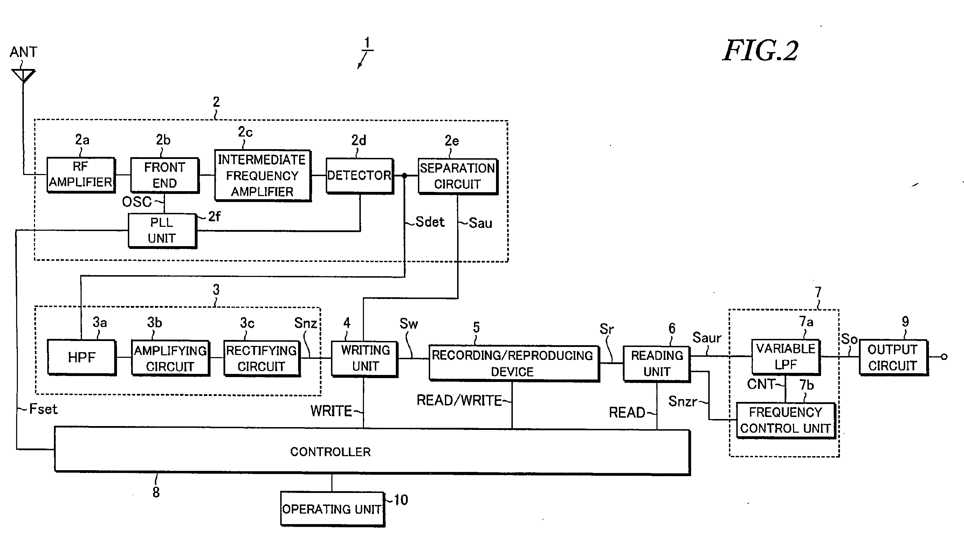

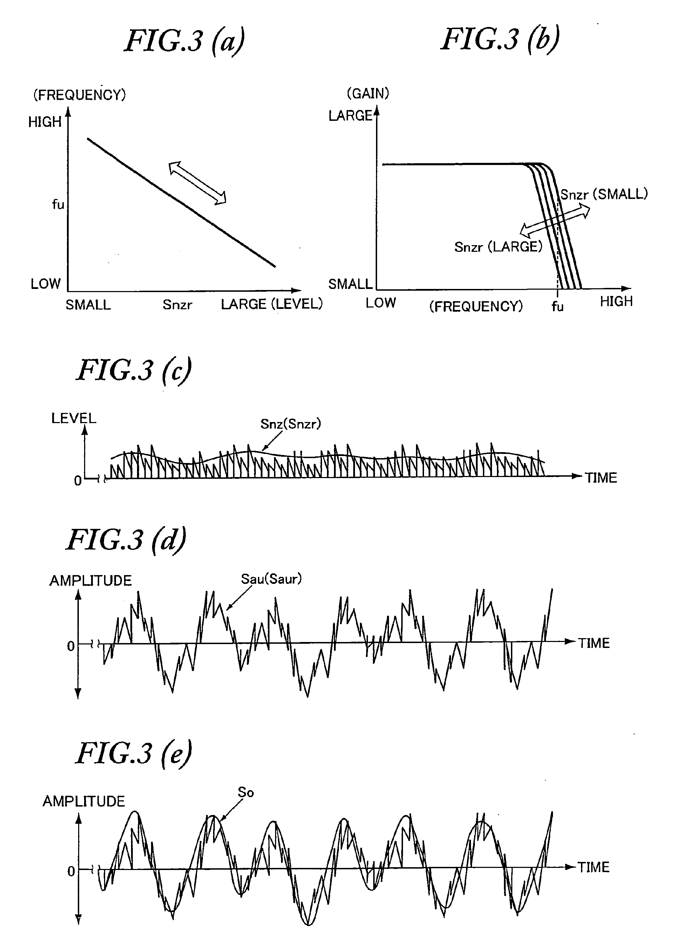

Next, description will be given to explain a more detailed example according to the embodiment shown in Fig. 1, with reference to Figs. 2 and 3.

Fig. 2 is a block diagram showing a composition of the receiver 1 of this example, using the same reference numerals to represent elements which are the same as or corresponding to those in Fig. 1.

As shown in Fig. 2, this receiver 1 comprises a tuner section 2 serving as receiving means connected with an antenna ANT which receives broadcast waves, a reception state detecting section 3, a writing unit 4, a recording/reproducing device 5, a reading unit 6, a noise reducing unit 7, a controller 8, an output circuit 9 for applying a power-amplification or the like to an output reproduction signal Sₒ outputted from the noise reducing unit 7 and supplying the signal to a speaker or the like (not shown), and an operating unit 10 for a user to perform an input operation or the like.

Here, the controller 8 is formed of a circuit equipped with a microprocessor (MPU) which has an operation control function, and performs a centralized control on the operation of the receiver 1 in accordance with a user's instruction inputted through the operating unit 10.

The tuner section 2 comprises: an RF amplifier 2a for amplifying a high frequency signal (RF signal) outputted from an antenna ANT which receives broadcast waves; PLL unit 2f for outputting a tuned-frequency signal (local oscillation signal) OSC in accordance with a frequency setting signal Fset specified by the controller 8; a front end 2b for mixing together an output of the RF amplifier 2a and the local oscillation signal OSC to generate and thus output an intermediate frequency signal; an intermediate frequency amplifier 2c for amplifying and outputting an intermediate frequency signal; a detector 2d for detecting an output of the intermediate frequency amplifier 2c and outputting a detection signal Sdet; and a separation circuit 2e for separating the detection signal into audio signals of respective channels and outputting a reproduction signal Sau as a bunch of the audio signals of respective channels.

Then, the detection signal Sdet is supplied to the reception state detecting section 3, while the reproduction signal Sau is supplied to the writing unit 4.

The reception state detecting section 3 comprises: a high pass filter 3a which receives a detection signal Sdet, an amplifier circuit 3b which amplifies an output of the high pass filter 3a, and a rectifier circuit 3c which generates a reception state detection signal Snz from the output of the amplifier circuit 3b.

Here, the high pass filter 3a includes a low pass cut-off frequency fd made equal to an upper limit of a frequency band of the detection signal Sdet outputted from the detector 2d when a reception state is acceptable, extracts and outputs a noise component mixed in the detection signal Sdet and having a higher frequency than the low pass cut-off frequency fd. The extracted noise component is then amplified by the amplifier circuit 3b and supplied to the rectifier circuit 3c.

The rectifier circuit 3d rectifies (smoothes) an absolute value of a noise component, generates, and then outputs a reception state detection signal Snz indicating an amplitude change as a reception state change.

The writing unit 4 includes an A/D converter (not shown) for A/D-converting a reproduction signal Sau and a reception state detection signal Snz into respective digital data, and performs an adjustment to synchronize these digital data with a reception timing so as to prevent a timing deviation, thereby supplying a recording signal Sw consisting of digital data trains including the reproduction signal Sau and the reception state detection signal Snz to the recording/reproducing device 5.
Further, similar to the above-described embodiment, the writing unit 4 adds an identification signal and an end signal consisting of digital data into a recording signal Sw and supplies the same to the recording/reproducing device 5, while the controller 8 manages various times (additional times) into which identification signal and end signal have been added, thereby making it possible to identify the scope of the recording signal Sw.
Moreover, the controller 8 displays additional time information on a liquid crystal display or the like provided in the operating unit 10, thereby showing a user a broadcast recorded in the recording/reproducing device 5.

The recording/reproducing device 5 records the recording signal Sw on a rewritable storage medium such as DVD, CD, semiconductor memory or the like, and then outputs the recording signal Sw as read-out signal Sr.

The reading unit 6 synchronism-separates a read-out signal Sr consisting of digital data and outputted from the recording/reproducing device 5 into a reproduction signal Saur and a reception state detection signal Snzr, and converts the signal into an analogue reproduction signal Saur and a reception state detection signal Snzr by virtue of a D/A converter (not shown) and outputs the same.

The noise reducing unit 7 comprises a variable low pass filter 7a which receives a reproduction signal Saur and a frequency control unit 7b which receives a reception state detection signal Snzr.

Here, the variable low pass filter 7a has a high pass cut-off frequency fu at an upper limit of an audible frequency band, and changes the high pass cut-off frequency fu in accordance with an instruction of a frequency adjustment control signal CNT supplied from the frequency control unit 7b.

The frequency control unit 7b outputs the frequency adjustment control signal CNT for changing the high pass cut-off frequency fu, in response to an amplitude change of the reception state detection signal Snzr.

Namely, as shown in Fig. 3(a), the frequency control unit 7b is provided with a memory which stores data in the form of a look-up table in which an amplitude of a reception state detection signal Snzr and a high pass cut-off frequency fu have been made corresponding to each other. In this way, it is possible to determine a high pass cut-off frequency fu by searching the data stored in the memory in accordance with an amplitude of the reception state detection signal Snzr.

Then, as shown in Fig. 3(b), it is supposed that a larger amplitude of a reception state detection signal Snzr will cause a worse reception state, so that the frequency control unit 7b will output a frequency adjustment control signal CNT for changing a high pass cut-off frequency fu of the variable low pass filter 7a towards a low frequency.
On the other hand, it is supposed that a lower amplitude of a reception state detection signal Snzr will ensure a better reception state, so that the frequency control unit 7b will output a frequency adjustment control signal CNT for changing a high pass cut-off frequency fu of the variable low pass filter 7a towards a high frequency.

In this way, by variably adjusting a high pass cut-off frequency of the variable low pass filter 7a, it is possible to remove a noise component mixed in the reproduction signal Saur, thereby outputting a noise-inhibited high quality reproduction signal Sₒ.

Next, description will be given to explain an operation of the receiver 1 of this example.
Similar to the receiver 1 of the present embodiment (shown in Fig. 1), the receiver 1 of this example is formed such that a user can operate the operating unit 10 to properly select <recording operation>, <reproducing operation>, and <simultaneous operations of recording and reproducing>. Therefore, the following description will be given to explain an operation of each utilization performed by a user.

### Recording operation

During a reception operation being performed by the tuner section 2, once a user selects <recording operation>, a write control signal WRITE will be supplied from the controller 8 to the writing unit 4 as well as to the recording/reproducing device 5, so that the writing unit 4 and the recording/reproducing device 5 will start recording operation. Then, the tuner section 2 performs a tuning and a detection or the like to output a reproduction signal Sau, while the reception state detecting section 3 outputs a reception state detection signal Snz. Further, the writing unit 4 generates a recording signal Sw having synchronized the reproduction signal Sau and the reception state detection signal Snz, and records the same in the recording/reproducing device 5.

Here, the reception state detecting section 3 passes a detection signal Sdet outputted from the detector 2d through the high pass filter 3a, so as to extract a noise component mixed in the detection signal Sdet in response to a reception state, while the rectifier circuit 3c rectifies an absolute value of a noise component amplified by the amplifier circuit 3b, thereby generating and outputting a reception state detection signal Snz indicating an envelope of the noise component, in a manner as schematically shown in Fig. 3(c).

Therefore, the writing unit 4 synchronizes a reproduction signal Sau containing a noise component schematically shown in Fig. 3(d) and a reception state detection signal Snz with a reception timing, thereby generating a recording signal Sw and recording the same in the recording/reproducing device 5.

Then, once a user instructs the recording to be ended, a control signal indicating the end of the recording will be outputted from the controller 8, while the write control signal WRITE is no longer outputted, so that the writing unit 4 and the recording/reproducing device 5 will end the recording operation.

### Reproducing Operation

Once a user specifies an additional time and instructs a reproducing to be started so as to reproduce a desired broadcast recorded in the recording/reproducing device 5, a specified additional time and a read control signal READ will be supplied from the controller 8 to the recording/reproducing device 5 as well as to the reading unit 6, so that the recording/reproducing device 5 and the reading unit 6 will start reproducing operation.

Then, the recording/reproducing device 5 outputs a read-out signal Sr specified by the additional time, while the reading unit 6 synchronism-separates the read-out signal Sr into a reproduction signal Saur and a reception state detection signal Snzr. Further, the frequency control unit 7b of the noise reducing unit 7 controls a high pass cut-off frequency fu of the variable low pass filter 7a in response to a change of the reception state detection signal Snzr, thereby removing a noise component mixed in the reproduction signal Saur and supplying a noise-inhibited reproduction signal to a speaker or the like.

Namely, when a reproduction signal Sau and a reception state detection signal Snzr outputted from the recording/reproducing device 5 and synchronism-separated by the reading unit 6 have waveforms shown in Figs. 3(c) and 3(d), the frequency control unit 7b will adjust and control the high pass cut-off frequency fu of the variable low pass filter 7a in response to an amplitude change of the reception state detection signal Snzr. In this way, as shown in Fig. 3(e), it is possible to output a reproduction signal Sₒ free from a noise component mixed in the reproduction signal Sau, thereby outputting a high quality sound from a speaker or the like.

Then, once the recording/reproducing device 5 finishes the outputting of the read-out signal Sr in relation to a broadcast specified by a user, or once the user instructs a reproducing to be ended, a control signal indicating the end of the recording will be outputted from the controller 8, while the write control signal WRITE is no longer outputted, and the writing unit 4 and the recording/reproducing device 5 will end recording operation.

In this way, once a user instructs a <reproducing operation>, it is possible to reproduce a previously recorded broadcast in accordance with a read-out signal Sr recorded in the recording/reproducing device 5. Further, when reproducing, since the noise reducing unit 7 will remove a noise component from the reproduction signal Saur in accordance with a reception state detection signal Snzr, it is possible to reproduce a noise-inhibited high quality sound through a speaker or the like, thereby providing a user with his or her desired sound.

### Simultaneous operations of recording and reproducing

While the tuner section 2 is performing a reception operation, once a user issues an instruction for carrying out a reproducing, simultaneous operation of recording and reproducing will be started under the control of the controller 8.

Here, when a user has specified an additional time and instructed simultaneous operations of recording and reproducing in order to select and reproduce a broadcast recorded in the recording/reproducing device 5, and when the simultaneous operations of recording and reproducing have been instructed without specifying an additional time, different recording/reproducing operations will be performed as follows.

First, when a user has specified an additional time and instructed simultaneous operations of recording and reproducing, the controller 8 will supply a write control signal WRITE to the writing unit 4 as well as to the recording/reproducing device 5, and supply an additional time and a read control signal READ to the recording/reproducing device 5 and the reading unit 6.

In this way, the writing unit 4 will record a broadcast being received as a recording signal Sw in the recording/reproducing device 5, while the recording/reproducing device 5 will output a recorded read-out signal Sr specified by an additional time through the reading unit 6. Further, the variable low pass filter 7a and the frequency control unit 7b of the noise reducing unit 7 will remove a noise component mixed in the reproduction signal Saur in response to a reception state detection signal Saur, thereby supplying a noise-inhibited reproduction signal Sₒ to a speaker or the like.

Thus, once a user has specified an additional time and instructed simultaneous operations of recording and reproducing, it is possible to reproduce and hear a previously recorded broadcast and at the same to newly record a broadcast being received. Further, since the noise reproducing unit 7 removes a noise component from the reproduction signal Saur in accordance with a reception state detection signal Snzr, it is possible to reproduce a noise-inhibited high quality sound through a speaker or the like, thereby providing a user with a high quality sound.

Furthermore, when a broadcast being currently received is recorded as a recording signal Sw in the recording/reproducing device 5, the reception state detecting section 3 will extract a noise component mixed in a detection signal Sdet. Further, the writing unit 4 will generate a recording signal Sw which has synchronized a reception state detection signal Snz and a reproduction signal Sau with a reception timing and record the same in the recording/reproducing device 5.
Therefore, even if a user later performs a reproducing in accordance with a recording signal Sw of a recorded broadcast, it is still possible to generate a noise-inhibited reproduction signal Sₒ in the noise reducing unit 7, thereby reproducing a high quality sound through a speaker or the like and supplying the same to a user.

Next, if a user has instructed simultaneous operations of recording and reproducing without specifying an additional time, the controller 8 will operate in accordance with a user's instruction to supply a write control signal WRITE to the writing unit 4 as well as to the recording/reproducing device 5, and supply a read control signal READ to the recording/reproducing device 5 and the reading unit 6, without outputting an additional time.

In this way, while the writing unit 4 is recording a broadcast being received as a recording signal Sw in the recording/reproducing device 5, the recording/reproducing device 5 will at the same time read the recording signal Sw so as to output the same as the read-out signal Sr through the reading unit 6. Therefore, the noise reducing unit 7 will generate and thus output a noise-inhibited reproduction signal Sₒ.

In this way, if a user instructs simultaneous operations of recording and reproducing without specifying an additional time, it is possible to record a broadcast being received in the recording/reproducing device 5 and at the same time output a read-out signal Sr of the broadcast.

Moreover, when the recording/reproducing device 5 records a broadcast being received as a recording signal Sw, a reception state detection signal Snz generated by the reception state detecting section 3 will also be recorded and at the same time read out, while the recording signal Sw recorded will be outputted as the read-out signal Sr.
In this way, the noise reducing unit 7 can remove a noise component from the reproduction signal Saur in accordance with the reception state detection signal Snzr, thereby making it possible to reproduce a noise-inhibited high quality sound through a speaker or the like and thus supply the same to the user.

Furthermore, in a case where a broadcast being currently received has been recorded as a recording signal Sw in the recording/reproducing device 5 and a user later performs a producing in accordance with the recording signal Sw of the recorded broadcast, the noise reducing unit 7 will be caused to generate a noise-inhibited reproduction signal Sₒ for output, thereby making it possible to reproduce a high quality sound through a speaker or the like and supply the same to the user.

As described above, according to the receiver 1 of this example, when a broadcast being received is recorded in the recording/reproducing device 5, the broadcast is recorded as a recording signal Sw consisting of a reproduction signal Sau and a reception state detection signal Snz indicating a reception state, which reception state detection signal Snz is generated in accordance with a noise component contained in the detection signal Sdet.
Then, the broadcast recorded in the recording/reproducing device 5 is reproduced. At this time, since it is possible to use the reception state detection signal Snz contained in the read-out signal Sr to remove a noise component mixed in the reproduction signal Saur, it is possible to provide a user with a high quality noise-inhibited broadcast.

### Example 2

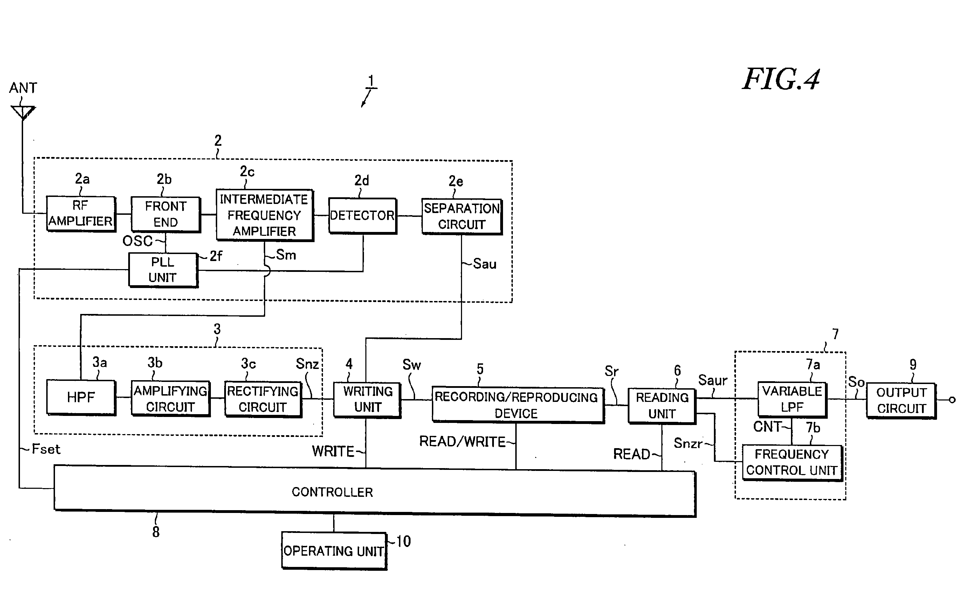

Next, description will be given to explain another example with reference to Fig. 4.
Fig. 4 is a block diagram showing a composition of a receiver 1 of this example, with the elements which are the same as or equivalent to those shown in Figs. 1 and 2 being represented by the same reference numerals.

The receiver 1 of this example can be compared with the receiver 1 shown in Fig. 2 as follows. In the receiver shown in Fig. 2, the reception state detecting section 3 generates a reception state detection signal Snz in accordance with a noise component currently mixed in the detection signal Sdet.
On the other hand, a reception state detecting section 3 provided in the receiver 1 of this example shown in Fig. 4 extracts a noise component mixed in an S-meter signal Sm outputted from an intermediate wave amplifier 2c by virtue of a high pass filter 3a, and amplifies the extracted signal by virtue of an amplifier circuit 3b, while a rectifier circuit 3c rectifies an absolute value of the amplified noise component, thereby generating a reception state detection signal Snz indicating an envelope of the noise component.

Here, the high pass filter 3a provided in the reception state detecting section 3 of this example has a low pass cut-off frequency fd which, when a reception state is acceptable, was made equal to an upper limit of a frequency band of the S-meter signal Sm outputted from the intermediate frequency amplifier 2c.

Then, a tuner section 2, a writing unit 4, a recording/reproducing device 5, a reading unit 6, a noise reducing unit 7, a controller 8, an output circuit 9, and an operating unit 10, all provided in the receiver 1 of this example, have the same structures and functions as the receiver 1 shown in Fig. 2.

Similar to the receiver 1 of the foregoing Example 1, the receiver 1 of this example is formed such that a user can operate the operating unit 10 to properly select <recording operation>, <reproducing operation>, and <simultaneous operations of recording and reproducing>.

In this way, once a user selects <recording operation>, the tuner section 2 will perform a tuning and a detection or the like to output a reproduction signal Sau, while the reception state detecting section 3 will extract a noise component mixed in an S-meter signal Sm, thereby generating a reception state detection signal Snz. Further, the writing unit 4 will generate a recording signal Sw having synchronized the reproduction signal Sau and the reception state detection signal Snz, thereby recording the signal in the recording/reproducing device 5.

Moreover, once a user specifies an additional time and selects <reproducing operation>, the recording/reproducing device 5 will output a read-out signal Sr specified by the additional time, while the reading unit 6 will synchronism-separate the read-out signal Sr into a reproduction signal Saur and a reception state detection signal Snzr.
Further, the frequency control unit 7b of the noise reducing unit 7 will control a high pass cut-off frequency fu of the variable low pass filter 7a in response to a change of the reception state detection signal Snzr, thereby removing a noise component mixed in the reproduction signal Saur, thus supplying a noise-inhibited reproduction signal Sₒ to a speaker or the like.

Moreover, once a user specifies an additional time and selects <simultaneous operations of recording and reproducing>, the writing unit 4 will record a broadcast being received as the recording signal Sw in the recording/reproducing device 5, while the recording/reproducing device 5 will at the same time output a recorded read-out signal Sr specified by the additional time through the reading unit 6. Further, the variable low pass filter 7a and the frequency control unit 7b of the noise reducing unit 7 will remove a noise component mixed in the reproduction signal Saur in response to a change of the reception state detection signal, thereby supplying a noise-inhibited reproduction signal Sₒ to a speaker or the like.

Furthermore, once a user selects <simultaneous operations of recording and reproducing> without specifying an additional time, the writing unit 4 will record a broadcast being received as a recording signal Sw in the recording/reproducing device 5, while the recording/reproducing device 5 will at the same time perform a reading-out, thereby outputting a read-out signal Sr through the reading unit 6.
Further, the variable low pass filter 7a and the frequency control unit 7b of the noise reducing unit 7 will remove a noise component mixed in the reproduction signal Saur in response to a change of the reception state detection signal, thereby supplying a noise-inhibited reproduction signal Sₒ to a speaker or the like.

In this way, according to the receiver 1 of this example, when a broadcast being received is recorded in the recording/reproducing device 5, the broadcast will be recorded as a recording signal Sw consisting of a reproduction signal Sau and a reception state detection signal Snz indicating a reception state, which reception state detection signal Snz is generated in accordance with a noise component contained in an S-meter signal.
Then, the broadcast recorded in the recording/reproducing device 5 is reproduced. At this time, since it is possible to use the reception state detection signal Snz contained in the read-out signal Sr to remove a noise component mixed in the reproduction signal Saur, it is possible to provide a user with a high quality noise-inhibited broadcast.

### Example 3

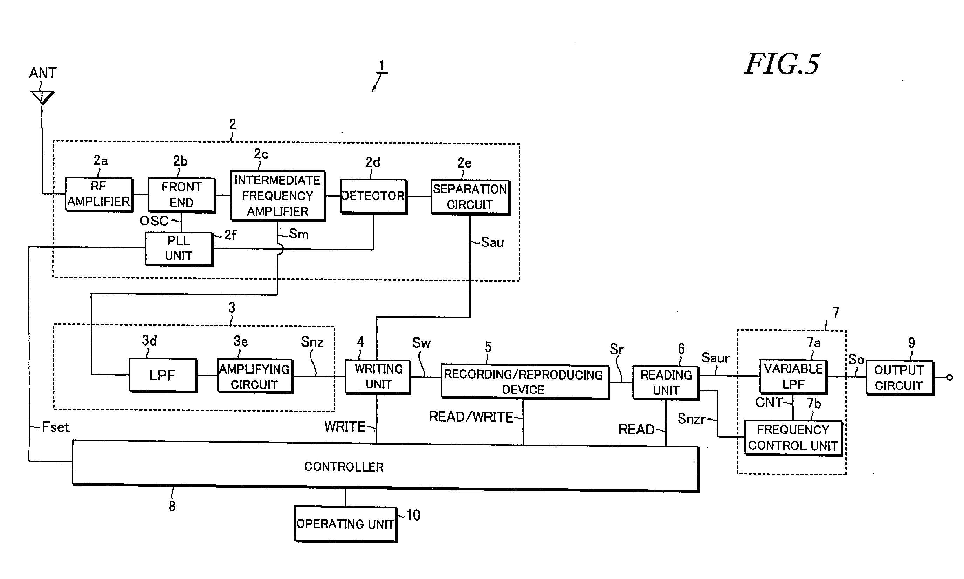

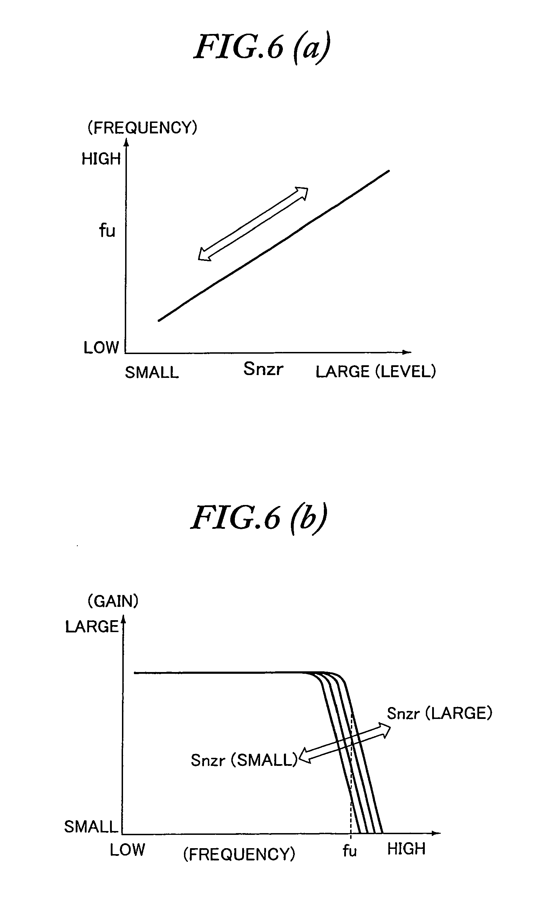

Next, description will be given to explain another example with reference to Fig. 5 and Fig. 6.
Fig. 5 is a block diagram showing a composition of a receiver 1 of this example, with the elements which are the same as or equivalent to those shown in Figs. 1, 2 and 4 being represented by the same reference numerals.

The receiver 1 of this example can be compared with the receiver 1 shown in Fig. 4 as follows. In the receiver shown in Fig. 4, the reception state detecting section 3 generates a reception state detection signal Snz in accordance with a noise component currently mixed in an S-meter signal. On the other hand, a reception state detecting section 3 provided in the receiver 1 of this example shown in Fig. 5 generates a reception state detection signal Snz by extracting a DC component of S-meter signal Sm in the low pass filter 3d and amplifying the component in the amplifier circuit 3e.

Here, the low pass filter 3d provided in the reception state detecting section 3 of this example has, when a reception state is acceptable, a high pass cut-off frequency fc made equal to an upper limit of a frequency band of an S-meter signal Sm outputted from the intermediate frequency amplifier 2c. For this reason, an acceptable reception state, i.e., a higher reception sensitivity will enable the low pass filter 3d to output a higher level signal, and enable the amplifier circuit 3e to output a higher level reception state detection signal Snz. On the other hand, a bad reception state, i.e., a lower reception sensitivity will cause the low pass filter 3d to output a lower level signal, and cause the amplifier circuit 3e to output a lower level reception state detection signal Snz.

Furthermore, in the receiver shown in Fig. 4, the frequency control unit 7b provided in the noise reducing unit 7 is set such that it is assumed that a reception condition will become worse if there is a larger amplitude of the reception state detection signal Snzr supplied from the reading unit 6, thereby changing a high pass cut-off frequency fu of the variable low pass filter 7a towards a low frequency, but is assumed that a reception condition will become better if there is a smaller amplitude of the reception state detection signal Snzr, thereby changing a high pass cut-off frequency fu of the variable low pass filter 7a towards a high frequency, in a manner shown in Figs. 3(a) and 3(b).

On the other hand, as schematically shown in Figs. 6(a) and 6(b), the frequency control unit 7b of this example shown in Fig. 5 is set such that it is assumed that a reception condition will become better if there is a larger amplitude of the reception state detection signal Snzr supplied from the reading unit 6, thereby changing a high pass cut-off frequency fu of the variable low pass filter 7a towards a high frequency, but is assumed that a reception condition will become worse if there is a smaller amplitude of the reception state detection signal Snzr, thereby changing a high pass cut-off frequency fu of the variable low pass filter 7a towards a low frequency.

Further, as shown in Fig. 5(a), the frequency control unit 7b is provided with a memory which has stored data in the form of a so-called look-up table in which the amplitude of reception state detection signal Snzr and the high pass cut-off frequency fu have been made corresponding to each other, thereby making it possible to determine a high pass cut-off frequency fu by searching the data of the memory in accordance with an amplitude of the reception state detection signal Snzr.

Then, a tuner section 2, a writing unit 4, a recording/reproducing device 5, a reading unit 6, a noise reducing unit 7, a controller 8, an output circuit 9, and an operating unit 10, all provided in the receiver 1 of this example, have the same structure and functions as the receiver 1 shown in Fig. 4.

Similar to the receiver 1 of the foregoing Example 1 and Example 2, the receiver 1 of this example is formed such that a user can operate the operating unit 10 to properly select <recording operation>, <reproducing operation>, and <simultaneous operations of recording and reproducing>.

In this way, once a user selects <recording operation>, the tuner section 2 will perform a tuning and a detection or the like to output a reproduction signal Sau, while the reception state detecting section 3 will extract a DC component from an S-meter signal, thereby generating a reception state detection signal Snz. Further, the writing unit 4 generates a recording signal Sw having synchronized the reproduction signal Sau and the reception state detection signal Snz, thereby recording the signal in the recording/reproducing device 5.

Moreover, once a user specifies an additional time and selects <reproducing operation>, the recording/reproducing device 5 will output a read-out signal Sr specified by the additional time, while the reading unit 6 will synchronism-separate the read-out signal Sr into a reproduction signal Saur and a reception state detection signal Snzr. Further, the frequency control unit 7b of the noise reducing unit 7 will control a high pass cut-off frequency fu of the variable low pass filter 7a in response to a change of the reception state detection signal Snzr, thereby removing a noise component mixed in the reproduction signal Saur, thus supplying a noise-inhibited reproduction signal Sₒ to a speaker or the like.

Moreover, once a user specifies an additional time and selects <simultaneous operations of recording and reproducing>, the writing unit 4 will record a broadcast being received as the recording signal Sw in the recording/reproducing device 5, while the recording/reproducing device 5 will at the same time output a recorded read-out signal Sr specified by the additional time through the reading unit 6.
Further, the variable low pass filter 7a and the frequency control unit 7b of the noise reducing unit 7 will remove a noise component mixed in the reproduction signal Saur in response to a change of the reception state detection signal Saur, thereby supplying a noise-inhibited reproduction signal Sₒ to a speaker or the like.

Furthermore, once a user selects <simultaneous operations of recording and reproducing> without specifying an additional time, the writing unit 4 will record a broadcast being received as the recording signal Sw in the recording/reproducing device 5, while the recording/reproducing device 5 will at the same time perform a reading-out, thereby outputting a read-out signal Sr through the reading unit 6.
Further, the variable low pass filter 7a and the frequency control unit 7b of the noise reducing unit 7 will remove a noise component mixed in the reproduction signal Saur in response to a change of the reception state detection signal Saur, thereby supplying a noise-inhibited reproduction signal Sₒ to a speaker or the like.

In this way, according to the receiver 1 of this example, when a broadcast being received is recorded in the recording/reproducing device 5, the broadcast will be recorded as a recording signal Sw consisting of a reproduction signal Sau and a reception state detection signal Snz indicating a reception state, which reception state detection signal Snz is generated in accordance with a noise component contained in an S-meter signal.
Then, the broadcast recorded in the recording/reproducing device 5 is reproduced. At this time, since it is possible to use the reception state detection signal Snz contained in the read-out signal Sr to remove a noise component mixed in the reproduction signal Saur, it is possible to provide a user with a high quality noise-inhibited broadcast.

Although the receiver 1 of the above-described embodiment and examples is formed to generate a detection signal Sdet, an S-meter signal and a reproduction signal Sau by applying an analogue signal processing to a received broadcast, the receiver 1 can also be formed of a digital circuit which performs a digital signal processing. Further, the receiver 1 of the above-described embodiment and examples can also be applied to serve as a receiver for receiving a digital broadcast.

## Claims

1. A receiver having recording/reproducing means for recording and reproducing received broadcast, the receiver comprising:
receiving means for receiving broadcast wave and generating reproduction signal;
reception state detecting means for generating a reception state detection signal indicating a reception state in accordance with an internal signal generated within the receiving means;
recording/reproducing means for recording as recording signal the reception state detection signal and the reproduction signal in a mutually corresponding relation; and
noise reducing means which receives the recording signal recorded in the recording/reproducing means and removes noise component contained in the recording signal and mixed in the reproduction signal in accordance with the reception state detection signal.

2. The receiver according to claim 1, wherein the reception state detecting means generates the reception state detection signal in accordance with a noise component mixed in a detection signal generated within the receiving means.

3. The receiver according to claim 1, wherein the reception state detecting means generates the reception state detection signal in accordance with a noise component mixed in an S-meter signal generated within the receiving means.

4. The receiver according to claim 1, wherein the reception state detecting means generates the reception state detection signal in accordance with a DC component of an S-meter signal generated within the receiving means.

5. The receiver according to any one of claims 1 to 4, wherein the noise reducing means includes a variable low pass filter which, upon receiving the recording signal recorded in the recording/reproducing means, variably adjusts a high pass cut-off frequency in accordance with the reception state detection signal, and removes noise component contained in the recording signal and mixed in the reproduction signal.

6. A recording/reproducing method for use with a receiver having receiving/reducing means for recording and reproducing received broadcast, the method comprising:
a receiving step for receiving broadcast wave and generating reproduction signal;
a reception state detecting step for generating a reception state detection signal indicating a reception state in accordance with an internal signal generated in the receiving step;
a writing step for recording as recording signal the reception state detection signal and the reproduction signal in a mutually corresponding relation in the recording/reproducing means;
a reading step for outputting the recording signal recorded in the recording/reproducing means;
a noise reducing step for removing noise component contained in the recording signal outputted in the reading step and mixed in the reproduction signal in accordance with the reception state detection signal.
